# EUROPÄISCHE PATENTANMELDUNG

(11) **EP 0 695 608 A1**
(43) Veröffentlichungstag der Anmeldung: **07.02.1996**
(21) Anmeldenummer: 95111141.8
(22) Anmeldetag: 15.07.1995
(51) Int. Cl.: B27K 5/02, C09D 15/00

(54) **Beize und Verfahren zum Färben von Holz**

(30) Priorität: 02.08.1994 DE 4427299
(71) Anmelder: A.W. Faber- Castell Unternehmensverwaltung GmbH & Co., D-90547 Stein (DE)
(72) Erfinder: Jankewitz, Axel, Dipl.-Ing., D-90768 Fürth (DE); Lugert, Gerhard, Dr., Dipl. -Chem., D-90431 Nürnberg (DE)
(74) Vertreter: Tergau, Enno, Dipl.-Ing.

(57) **Zusammenfassung**

Die Erfindung betrifft eine Beize auf Wasserbasis zum Färben von Holz. Als Farbstoffe werden Azo-, Diazo- und Triarylmethanfarbstoffe eingesetzt. Die Beize ist dadurch gekennzeichnet, daß sie ein die Konzentration an freien Eisenionen verringerndes Stabilisierungsmittel enthält.

## Beschreibung

Die Erfindung betrifft eine Beize und ein Verfahren zum Färben von Holz.

Holzbeizen sind beispielsweise aus der Möbelindustrie bekannt und dienen dazu, die Holzoberfläche eines Möbelstücks möglichst unter Aufrechterhaltung seiner natürlichen Maserung einzufärben. Dazu werden die Oberflächen der Möbelstücke mit der Beize bestrichen, besprüht oder auf sonstige Weise behandelt. Die Beize dringt dabei nur relativ Wenig in die Holzoberfläche ein. Zur Erreichung der gewünschen Färbung der Holzoberfläche reicht dies aber aus. Es gibt jedoch Anwendungsfälle, bei denen nicht nur eine oberflächliche Einfärbung des Holzes sondern eine tiefergehende oder gar eine Durchfärbung des Holzes gewünscht ist. Letzteres ist bei der Herstellung von Bleistiften oder Buntstiften der Fall, bei denen der die Stiftmine ummantelnde Holzkörper eine durchgehend einheitliche Färbung aufweisen soll. Ein weiteres Beispiel, bei dem die Durchfärbung des Holzes erwünscht ist, sind Holzrohlinge, die später etwa durch Fräsen oder Zersägen bearbeitet werden sollen, ohne daß dabei an den bearbeiteten Stellen das blanke, uneingefärbte Holz hervortritt. Derartige Färbevorgänge werden üblicherweise in Autoklaven durchgeführt. Dazu werden Holzstückchen, im Falle der Bleistift- oder Buntstiftherstellung brettchenartige Zuschnitte, in einen Autoklaven eingelegt und in eine Farbbeize eingetaucht. Der Autoklav wird dann geschlossen und das Ein- bzw. Durchfärben durch Temperatur- und Druckerhöhung in Gang gesetzt. Je nach Holzart und Dicke der zu färbenden Holzzuschnitte kann eine Durchfärbung mehrere Stunden bis sogar einige Tage betragen.

Bei den verwendeten Farbstoffen kann es sich naturgemäß um eine sehr breite Palette von verschiedenen Farbstofftypen handeln. Zum Färben von Holz werden jedoch in der Regel zwei Gruppen von Farbstoffen verwendet, nämlich saure Farbstoffe, die auch als anionische Farbstoffe bezeichnet werden, und basische oder kationische Farbstoffe.

Während in Autoklaven aus nichtrostendem Stahl, beispielsweise V2A-Stahl, bei keiner der genannten Farbstoffgruppen nennenswerte Probleme hinsichtlich der Stabilität der Beizen auftreten, wurde bei Verwendung saurer Farbstoffe in Autoklaven aus normalem, also nicht antikorrosiv eingestellten Stählen beobachtet, daß mit fortschreitender Behandlungsdauer die Farbstoffe zusehends beeinträchtigt werden. Die Beeinträchtigung besteht darin, daß sich die Farbe der zugesetzten Farbstoffe zusehends verändert. Dieser Farbveränderungs-Effekt tritt besonders bei Azo- und Diazo- und in abgeschwächter Form auch bei Triarylmethan-Farbstoffen auf. Bekannterweise werden die sauren Farbstoffe in neutralem bis alkalischem Milieu eingesetzt. Am Ende eines Färbevorgangs ist in vielen Fällen der pH-Wert der Beize je nach der verwendeten Holzart mehr oder weniger stark in den sauren Bereich abgesunken. Dies liegt daran, daß im Holz organische Säuren enthalten sind, die ein Ansteigen der H₃O⁺-Ionenkonzentration bewirken. Dieser Effekt kann aber für die beobachtete Farbveränderung nicht oder zumindest nicht allein verantwortlich sein, da bei Autoklaven aus Edelstahl trotz der pH-Absenkung im allgemeinen keine Farbveränderungen beobachtet werden.

Ausgehend von den geschilderten Beobachtungen ist es die Aufgabe der Erfindung, eine Beize sowie ein Verfahren vorzuschlagen, die in Autoklaven aus nicht rostfreiem Stahl und unter Einsatz von Azo-, Diazo- und Triarylmethan-Farbstoffen anwendbar sind.

Diese Aufgabe wird durch eine Beize mit der Merkmalskombination des Anspruches 1 bzw. einem Verfahren mit der Merkmalskombination des Anspruches 13 gelöst. Die erfindungsgemäße Beize enthält danach ein Stabilisierungsmittel, das die Konzentration der aus dem Autoklaven in die Beize übergetretenen Eisenionen verringert. Es hat sich nun überraschenderweise gezeigt, daß dadurch die vorher beobachteten Farbveränderungen nicht mehr bzw. erst nach wesentlich längerer Behandlungsdauer auftreten. Durch das erfindungsgemäß zugesetzte Stabilisierungsmittel wird die Konzentration der in die Färbelösung übergetretenen Eisenionen verringert bzw. gering gehalten und dadurch deren Einwirkung auf die chromophoren Gruppen der Farbstoffe herabgesetzt. Die Einwirkung der Eisenionen auf die Farbstoffe kann so interpretiert werden, daß das Eisenion im Sinne einer Lewis-Säure mit dem II-Elektronensystem des Farbstoffs zusammenwirkt und dabei dessen Licht-Adsorptionseigenschaften verändert. Für die Enststehung des Farbveränderungseffektes scheint also die Konzentration an freien Eisenionen eine entscheidende Rolle zu spielen. In dem üblicherweise bei den genannten Farbstoffen vorhandenen neutralen bis alkalischen Milieu dürfte es sich dabei überwiegend um Fe-III-Ionen handeln.

Für die Absenkung der Eisenionenkonzentration bzw. zur Verhinderung, daß überhaupt eine die chromophore Gruppe der Farbstoffe beeinflussende Konzentration an Eisenionen entsteht, stehen prinzipiell zwei Wege zur Verfügung. Das Stabilisierungsmittel ist eine Puffersubstanz, die den pH-Wert der Beize auf einem Wert hält der größer als 7,0 ist. Eine nennenswerte Konzentration an Fe-II und Fe-III-Ionen kann in diesem pH-Bereich gar nicht entstehen, da die Eisenionen als Eisenhydroxid ausgefällt werden. Ebenso wirkt der Puffer, der vorzugsweise ein wasserlösliches anorganisches Salz ist, einer Absenkung des pH-Wertes durch im Holz vorhandene organische Säuren entgegen. Als Puffer werden vorteilhaft solche Substanzen eingesetzt, die weder eine Wechselwirkung mit dem zu färbenden Holz, noch eine solche mit dem eingesetzten Farbstoff eingehen. Beispielsweise sind hier Puffersubstanzen zu nennen wie Acetate und Carbonate von Ammonium, Kalium und Natrium sowie Ammoniumhydrogensphosphat, sekundäre und tertiäre Phosphate des Kaliums und Natriums oder Natriumammoniumhydrogenphosphat. Es sind aber auch organische Puffersubstanzen einsetzbar.

Die Eisenionen können aber auch dadurch unschädlich gemacht werden, daß sie mit Hilfe eines Komplexbildners maskiert werden. Die Konzentration der Eisenionen an sich wird dadurch zwar nicht verhindert, es sind aber keine freien Ionen mehr, d.h. sie sind von den Liganden der komplexbildenden Substanz umhüllt, also quasi abgeschirmt. Ihre Eigenschaft als Lewis-Säure gegenüber den TT-Elektronen des Farbstoffes kann damit nicht zur Entfaltung kommen. Als Komplexbildner können z.B. folgende Substanzen verwendet werden: Diacetyldioxim, 1,10 - Phenantrolin, Terpyridin und wasserlösliche Salze der Ethylendiamintetraessigsäure, der Diethylentriaminpentaessigsäure oder der 1,2- Cyclohexylendinitrilotetraessigsäure.

Das Stabilisierungsmittel kann auch sowohl eine Puffersubstanz als auch einen Komplexbilder enthalten. Es hat sich überraschenderweise gezeigt, daß durch das gleichzeitige Vorhandensein eines Puffers und eines Komplexbildners eine Stabilisierung der Beize erreicht wird, die über das Ausmaß der Wirkung der Einzelsubstanzen hinausgeht (siehe hierzu weiter unten).

Die erfindungsgemäße Beize kann übliche Zusatzstoffe wie Netzmittel, wasserlösliche Wachsdispersionen oder Fettsäurederivate und Konservierungsmittel enthalten, ohne daß dadurch der erfindungsgemäße Effekt beeinträchtigt wird. Der Zusatz von Konservierungsmitteln ist beispielsweise dann angezeigt, wenn eingefärbte Holzzuschnitte über einen längeren Zeitraum unter feuchtwarmen Bedingungen, wie etwa in den Tropen, gelagert werden sollen. Ihre Aufgabe ist es, den Befall der Holzzuschnitte vor allen Dingen mit Schimmelpilzen zu verhindern. Wasserlösliche Wachsdispersionen oder wasserlösliche Fettsäurederivate werden beispielsweise zugefügt, wenn aus den gefärbten Holzzuschnitten Stifte hergestellt werden sollen. Die genannten Stoffe lagern sich in den Hohl- bzw. Kapillarräumen des Holzes ab und bewirken, daß sich der daraus hergestellte Stift weich spitzen läßt und daß die beim Spitzen vom Spitzkonus des Stiftes abgeschälten Späne nicht so leicht zerbrechen und zu Krümeln zerfallen. Durch die Zugabe eines Netzmittels wird die Oberflächenspannung des Hauptanteils der Beize, nämlich des Wassers herabgesetzt. Dadurch wird die Penetrierfähigkeit der Beize in dem Kapillarsystem des Holzes erhöht.

In Anspruch 7 ist einen Zusammensetzung einer erfindungsgemäßen Beize genannt, in der vorteilhafte Gehaltsbereiche bzw. Gehaltsgrenzen der wesentlichen Inhaltsstoffe einer erfindungsgemäßen Beize, nämlich Farbstoff und Stabilisierungsmittel sowie Netzkonservierungsmittel und Wasser angegeben sind. In den weiteren Ansprüchen sind vorteilhafte Rezepturen für erfindungsgemäße Beizen angegeben.

Die Erfindung wird nun anhand von Ausführungsbeispielen näher erläutert:

Zur Herstellung der folgenden Beispiel-Rezepturen wurde ein Laborautoklav mit einem Fassungsvermögen von etwa 5 l verwendet. Der Autoklav bestand aus normalem, also nicht rostfreiem Stahl. Ein Kontakt der Beize mit dem genannten Material war stets gegeben. In den Autoklaven wurde ein Volumen von ca. 2 l Holz in Form von Brettchen, wie sie zur Herstellung von Kosmetik-, Blei- oder Buntstiften benötigt werden, eingelegt. Der Autoklav war zumindest so weit mit Beize gefüllt, daß die Holzbrettchen vollständig in der Beize untergetaucht waren. Die Temperatur betrug in allen Fällen 50°C bis 60°C, der pH-Wert lag zwischen 8 und 10. Außerdem wurden Druckwerte von 13 bis 15 bar eingehalten.

Die Versuche wurden so durchgeführt, daß nach jeweils einem Beizdurchgang mit einer Dauer von ca. 24 Std. die Probebrettchen entnommen und die Färbung der Brettchen bzw. der im Autoklaven vorhandenen Restbeize überprüft wurde. Sodann wurden neue, d.h. also ungefärbte Brettchen eingelegt und die durch den vorausgegangenen Färbeprozeß verbrauchte Beize ergänzt.

Die %-Angaben in den nun folgenden Rezepturen sind Gew.%-Angaben.

### Referenzbeispiel ohne Stabilisierungsmittel (Schwarze Beize):

| | |
|---|---|
| Acid Yellow 23 C.I. 19140 | 0,8% |
| Acid Red 18 C.I. 16255 | 2,8% |
| Acid Blue 9 C.I. 42090 | 1,4% |
| Polyoxyethylen - (20) - sorbitan - monolaurat | 0,8% |
| Chloracetamid/Natriumbenzoatmischung | 0,2% |
| Rest Wasser. | |

Es wurden zwei verschiedene Holzarten gebeizt, nämlich Jelutong-Holz und Holz der Kalifornischen Zeder. Das Volumen der jeweiligen Holzart betrug etwa 1 l. Als Ergebnis konnte festgestellt werden, daß nach dem ersten Beizdurchgang die Schwarzfärbung der Beize bereits einen geringen Grünstich aufwies. Sodann wurde ein zweiter Beizvorgang durchgeführt, wobei vorher das verbrauchte Beizenvolumen ergänzt wurde. Nach dem zweiten Beizvorgang wies die Schwarzbeize eine deutliche Grünfärbung auf.

Dieses Versuchsergebnis zeigt, daß herkömmliche Beizen in Autoklaven aus normalem, nicht rostfreien Stahl praktisch nicht verwendbar sind, da nur ein einziger Beizvorgang durchführbar ist. Die Beize ist durch die erste, sich über 24 Std. erstreckende Behandlungsphase bereits so geschädigt, daß sie für einen zweiten Beizvorgang nicht mehr brauchbar ist. Für die großtechnische Durchführung von Holzbeizungen bedeutet dies, daß ein kontinuierlicher Betrieb, bei dem also ein größeres Beizenvolumen über mehrere Beizvorgänge hinweg im Autoklaven bleibt und nur neue Holzchargen in den Autoklaven eingelegt und verbrauchte Beizvolumina nachgefüllt werden müssen, nicht möglich ist.

### Beispiel 1 (Schwarzbeize):

| | |
|---|---|
| Acid Yellow 23 C.I. 19140 | 0,8% |
| Acid Red 18 C.I. 16255 | 2,8% |
| Acid Blue 9 C.I. 42090 | 1,4% |
| Polyoxyethylen - (20) -sorbitan - monolaurat | 0,8% |
| Chloracetamid/Natriumbenzoatmischung | 0,2% |
| Natriumcarbonat | 2,5% |
| Rest Wasser. | |

Mit dieser Beize konnten zwischen 3 und 4 Beizvorgänge durchgeführt werden, ohne daß sich der Schwärzungsgrad sowohl der Beize als auch des damit gefärbten Holzes verändert hat. Erst nach weiteren Beizdurchgängen wurde eine Farbverschiebung in Richtung Grün und im weiteren Verlauf der Versuchsfortführung eine Farbveränderung in Richtung Blaugrün erkennbar.

Bei den in den beiden obigen und auch in den folgenden Beispielen verwendeten Farbstoffen Acid Red 18 und Acid Yellow 23 handelt es sich um Azo-Farbstoffe, wogegen Acid Blue 9 ein Triarylmethanfarbstoff ist. Diese Farbstoffe gehören der Gruppe der sauren oder anionischen Farbstoffe an. Das Versuchsergebnis gemäß Beispiel 1 läßt sich, was die Beeinflussung der Farbe bzw. der Chromophorengruppen der Farbstoffe durch die aus dem Autoklaven in die Färbelösung übergetretenen Eisenionen betrifft, folgendermaßen interpretieren: Die Azo-Farbstoffe, d.h. Acid Yellow 23 und insbesondere Acid Red 18, sind am empfindlichsten. Sie werden zuerst beeinträchtigt. Zunächst werden also die Rottöne der Farbstoffmischung geschwächt. Der relative Anteil des blauen und des gelben Farbstoffes steigt demgemäß an, woraus sich die beobachtete Grünfärbung ergibt. Mit zunehmender Versuchsdauer wird dann auch der gelbe Farbstoff beeinträchtigt, was sich in der Verschiebung der Farbe in Richtung Blau äußert. Am stabilsten ist also der Triarylmethanfarbstoff Acid Blue 9. Er wird aber bei fortgesetzter Versuchsdauer ebenfalls angegriffen und letztlich entfärbt.

Aus dem Vergleich zwischen dem Referenzbeispiel und dem Beispiel 1 geht deutlich hervor, daß durch eine erfindungsgemäße Zugabe eines Puffers, im vorliegenden Fall Natriumcarbonat, eine erhebliche Verlängerung der Beizdauer erreicht werden kann. Eine völlige Neufüllung eines Autoklaven mit einer frischen Beize muß erst nach 3 bis 4 Beizdurchgängen erfolgen. Berücksichtigt man, daß bei einer großtechnischen Durchführung erheblich größere Volumina an Beize eingesetzt werden, wird der Vorteil der erfindungsgemäßen Beize bzw. des erfindungsgemäßen Verfahrens gegenüber herkömmlichen Beizverfahren deutlich. Die Ersparnis an Zeitaufwand und Material ist evident.

### Beispiel 2 (Schwarzbeize):

| | |
|---|---|
| Acid Yellow 23 C.I. 19140 | 0,8% |
| Acid Red 18 C.I. 16255 | 2,8% |
| Acid Blue 9 C.I. 42090 | 1,4% |
| Polyoxyethylen - (20) - sorbitan-monolaurat | 0,8% |
| Chloracetamid/Natriumbenzoatmischung | 0,2% |
| Ethylendiamintetraessigsäure Tetranatriumsalz | 3,0% |
| Rest Wasser. | |

Bei diesem Beispiel wurde als Stabilisierungsmittel nicht ein Puffer sondern ein Komplexbildner, nämlich Ethylendiamintetraessigsäure Tetranatriumsalz verwendet. Die Schwarzbeize gemäß Beispiel 2 überstand 4 Beizdurchgänge ohne Farbveränderung. Erst ab dem 5. Beizvorgang wurde eine Verschiebung des Farbtons in Richtung Blaugrün beobachtet. Auch hier wurde als erstes der am wenigsten beständige Farbstoff Acid Red 18 beeinträchtigt.

### Beispiel 3 (Schwarzbeize):

| | |
|---|---|
| Acid Blue 9 C.I. 42090 | 1,4% |
| Acid Red 18 C.I. 16255 | 2,8% |
| Acid Yellow 23 C.I. 19140 | 0,8% |
| Polyoxyethylen - (20) - sorbitan-monolaurat | 0,8% |
| Chloracetamid/Natriumbenzoatmischung | 0,2% |
| Natriumacetat | 3% |
| Ethylendiamintetraessigsäure Tetranatriumsalz | 3% |
| Rest Wasser. | |

Diese Beize behielt über mindestens 5 Beizvorgänge hinweg ihre Farbkonstanz. Erst bei weiteren Beizvorgängen war eine Farbverschiebung in Richtung Grün (Entfärbung des Rot-Farbstoffs) und im weiteren Versuchsverlauf eine Verfärbung in Richtung Blau (Entfärbung des Gelb-Farbstoffes) beobachtbar.

Vergleicht man die Ergebnisse dieses Versuchs mit denen von Beispiel 1 und Beispiel 2, so wird deutlich, daß durch die Gegenwart sowohl eines Puffers als auch eines Komplexbildners eine weitere Verbesserung der Stabilität der Beize erreicht werden kann. Während mit Natriumcarbonat als alleiniges Stabilisierungsmittel eine Farbkonstanz über 3 bis 4 Beizvorgänge und mit Ethylendiamintetraessigsäure Natriumsalz eine Farbkonstanz über 4 Beizvorgänge hinweg erreicht wurde, wird die Farbkonstanz einer Beize, bei der Puffer und Komplexbildner gleichzeitig vorhanden sind, weiter verbessert. Dies zeigt sich daran, daß bei dem Versuch gemäß Beispiel 3 eine Farbkonstanz über mindestens 5 Beizvorgänge beobachtet wurde. Offensichtlich ergänzen sich Puffer und Komplexbildner in synergistischer Weise.

Bei einem Kontrollversuch wurden Natriumacetat und Ethylendiamintetraessigsäure Tetranatriumsalz weggelassen. Eine Verfärbung in Richtung Grün wurde bereits nach einem einzigen Beizdurchgang beobachtet.

### Beispiel 4 (Grüne Beize):

| | |
|---|---|
| Acid Blue 3 C.I. 42051 | 1,0% |
| Acid Yellow 23 C.I. 19140 | 4,0% |
| Polyoxyethylen - (20) - sorbitan-monolaurat | 2,5% |
| Polyglykolether | 2% |
| Parabenmischung | 0,3% |
| Dikaliumhydrogenphosphat | 2% |
| Ethylendiamintetraessigsäure Tetranatriumsalz | 4% |
| Rest Wasser. | |

Bei diesem Versuch wurden Pappel- und Jelutong-Hölzer gefärbt. Die grüne Farbe der Beize blieb über mindestens 6 Beizdurchgänge unverändert erhalten. Bei einem Vergleichsversuch wurden die Stabilisierungsmittel weggelassen mit dem Ergebnis, daß bereits nach einem Beizdurchgang eine Verfärbung nach Blau erkennbar war. Auch bei diesem Versuchsergebnis wird die synergistische Wirkung des gleichzeitigen Vorhandenseins von Puffer und Komplexbildner deutlich.

### Beispiel 5 (Dunkelgraue Beize):

| | |
|---|---|
| Food Black 1 C.I. 28440 | 0,5% |
| Acid Yellow 23 C.I. 19140 | 0,4% |
| Acid Red 18 C.I. 16255 | 1,4% |
| Acid Blue 9 C.I. 42090 | 0,7% |
| Polyoxyethylen - (20) - sorbitan-monolaurat | 0,5% |
| Parabenmischung | 0,3% |
| Natriumstearat | 3,0% |
| Ammoniumcarbonat | 2,% |
| 1,2 Cyclohexilendinitrilotetraessigsäure Dinatriumsalz | 6% |
| Rest Wasser. | |

Bei dem Farbstoff Food Black 1 handelt es sich um einen Diazo-Farbstoff. Als Stabilisierungsmittel wurde der Beize eine Mischung aus Ammoniumcarbonat und 1,2 Cyclohexilendinitrilotetraessigsäure Dinatriumsalz zugefügt. Als Ergebnis konnte festgestellt werden, daß die dunkelgraue Farbe der Beize über mindestens 4 Beizvorgänge stabil blieb. Ein Vergleichsversuch ohne Stabilisierungsmittel hat ergeben, daß bereits nach einem Beizdurchgang eine Verfärbung in Richtung Grün aufgetreten ist, die sich mit zunehmender Anzahl der Beizvorgänge zusehends nach Blau hin verschoben hat. Daß bei diesem Beispiel trotz gleichzeitigen Vorhandenseins von Puffer und Komplexbildner nur 4 Beizvorgänge erreicht wurden (Beispiel 3: mind. 5 Beizvorgänge; Beispiel 4: mind. 6 Beizvorgänge), könnte etwa damit erklärt werden, daß der Diazo-Farbstoff Food Black 1 C.I. 28440 eine noch geringere Stabilität gegenüber Eisenionen aufweist als Acid Red 18 C.I. 16255.

### Beispiel 6 (orangefarbene Beize)

| | |
|---|---|
| - Acid Red 18 C.I. 16255 | 3,6% |
| - Acid Yellow 23 C.I. 19140 | 1,4% |
| - Polyoxyethylen - (20)- sorbitan-monolaurat | 0,1% |
| - Choracetamid/Natriumbenzoatmischung | 0,2% |
| - Natriumacetat | 3,0% |
| - Diacetyldioxim | 4,0% |
| - Rest Wasser | |

Die orangefarbene Beize behielt über mindestens 5 Beizvorgänge hinweg ihre Farbkonstanz. Erst bei weiteren Beizvorgängen war eine Farbverschiebung in Richtung Gelb und im weiteren Versuchsablauf eine Entfärbung auch des gelben Farbstoffes beobachtbar. Auch hier macht sich der Synergie-Effekt des gleichzeitigen Vorhandenseins von Komplexbildner und Puffer bemerkbar.

Abschließend sei angemerkt, daß auch bei anderen als den oben aufgeführten Farbstoffgruppen Farbbeeinträchtigungen beobachtet wurden, wenn der Beizprozeß in Autoklaven durchgeführt wurde, die aus nicht rostfreiem Stahl bestehen. Es kann daher mit einiger Berechtigung vermutet werden, daß diese Beeinträchtigung der Farbstoffe ebenfalls auf freie Eisenionen zurückzuführen ist.

Das der vorliegenden Erfindung zugrundeliegende Prinzip, nämlich die Verringerung der Eisenionenkonzentration durch Puffer und/oder Komplexbildner dürfte daher allgemein auf Farbstoffe übertragbar sein, die durch den Kontakt mit der Oberfläche eines aus nicht rostfreiem Stahl bestehenden Autoklaven in ihrer Farberscheinung beeinträchtigt werden.

## Patentansprüche

1. Beize auf Wasserbasis zum Färben von Holz, mit wenigstens einem Farbstoff, der aus einer Gruppe, bestehend aus Azo-, Diazo- und Triarylmethanfarbstoffen ausgewählt ist,
dadurch gekennzeichnet,
daß sie ein die Konzentration an freien Eisenionen verringerndes Stabilisierungsmittel enthält.

2. Beize nach Anspruch 1,
dadurch gekennzeichnet,
daß das Stabilisierungsmittel wenigstens einen Puffer enthält, mit dem der pH-Wert der Beize auf einen Wert > 7,0 einstellbar ist.

3. Beize nach Anspruch 2,
dadurch gekennzeichnet,
daß der Puffer ein anorganisches wasserlösliches Salz ist.

4. Beize nach Anspruch 1,
dadurch gekennzeichnet,
daß das Stabilisierungsmittel wenigstens einen Komplexbildner enthält, der mit Eisenionen eine Komplex-Verbindung eingeht.

5. Beize nach einem der Ansprüche 1 bis 4,
dadurch gekennzeichnet,
daß sie sowohl wenigstens einen Puffer als auch wenigstens einen Komplexbildner enthält.

6. Beize nach einem der Ansprüche 1 bis 5,
dadurch gekennzeichnet,
daß sie weitere Hilfsstoffe wie jeweils wenigstens ein Netzmittel, eine wasserlösliche Wachsdispersion, ein wasserlösliches Fettsäurederivat und ein Konservierungsmittel enthält.

7. Beize nach einem der Ansprüche 1 bis 6 mit der folgenden Zusammensetzung (in Gew.%):
Farbstoff 1 - 20%
Netzmittel0,01 - 5%
Konservierunsmittel 0,1 - 0,5%
Stabilisierungsmittel 1 - 20%
wobei der Rest Wasser ist und der Farbstoff sowohl ein einzelner Farbstoff als auch eine Farbstoffmischung sein kann.

8. Beize nach Anspruch 7, mit folgender Zusammensetzung (in Gew.%):
| | |
|---|---|
| Acid Yellow 23 C.I. 19140 | 0,8% |
| Acid Red 18 C.I. 16255 | 2,8% |
| Acid Blue 9 C.I. 42090 | 1,4% |
| Polyoxyethylen - (20) - sorbitan - monolaurat | 0,8% |
| Chloracetamid/Natriumbenzoatmischung | 0,2% |
| Natriumcarbonat | 2,5% |
| Rest Wasser. | |

9. Beize nach Anspruch 7, mit folgenderr Zusammensetzung (in Gew.%):
| | |
|---|---|
| Acid Yellow 23 C.I. 19140 | 0,8% |
| Acid Red 18 C.I. 16255 | 2,8% |
| Acid Blue 9 C.I. 42090 | 1,4% |
| Polyoxyethylen - (20) - sorbitan-monolaurat | 0,8% |
| Chloracetamid/Natriumbenzoatmischung | 0,2% |
| Ethylendiamintetraessigsäure Tetranatriumsalz | 3,0% |
| Rest Wasser. | |

10. Beize nach Anspruch 7, mit folgender Zusammensetzung (in Gew.%):
| | |
|---|---|
| Acid Red 18 C.I. 16255 | 3,6% |
| Acid Yellow 23 C.I. 19140 | 1,4% |
| Polyoxyethylen - (20) - sorbitan-monolaurat | 0,1% |
| Chloracetamid/Natriumbenzoatmischung | 0,2% |
| Natriumacetat | 3% |
| Diacetyldioxim | 4% |
| Rest Wasser. | |

11. Beize nach Anspruch 7, mit folgender Zusammensetzung (in Gew.%):
| | |
|---|---|
| Acid Blue 3 C.I. 42051 | 1,0% |
| Acid Yellow 23 C.I. 19140 | 4,0% |
| Polyoxyethylen - (20) - sorbitan-monolaurat | 2,5% |
| Polyglykolether | 2% |
| Parabenmischung | 0,3% |
| Dikaliumhydrogenphosphat | 2% |
| Ethylendiamintetraessigsäure Tetranatriumsalz | 4% |
| Rest Wasser. | |

12. Beize nach Anspruch 7, mit folgender Zusammensetzung (in Gew.%):
| | |
|---|---|
| Food Black 1 C.I. 28440 | 0,5% |
| Acid Yellow 23 C.I. 19140 | 0,4% |
| Acid Red 18 C.I. 16255 | 1,4% |
| Acid Blue 9 C.I. 42090 | 0,7% |
| Polyoxyethylen - (20) - sorbitan-monolaurat | 0,5% |
| Parabenmischung | 0,3% |
| Natriumstearat | 3,0% |
| Ammoniumcarbonat | 2,% |
| 1,2 Cyclohexilendinitrilotetraessigsäure Dinatriumsalz | 6% |
| Rest Wasser. | |

13. Verfahren zum Färben von Holz, bei welchem
- das Holz in einem im wesentlichen aus nicht rostfreiem Stahl bestehenden Autoklaven eingelegt und in einer Beize eingetaucht ist,
- und das Holz unter Druck- und Temperatureinwirkung gefärbt wird,
dadurch gekennzeichnet,
daß der Beize ein Stabilisierungsmittel zugesetzt ist, das die Konzentration von während des Färbevorgangs aus der mit der Beize in Kontakt stehenden Oberfläche des Autoklaven in die Beize übergetretenen Eisenionen verringert.

14. Verfahren nach Anspruch 13,
dadurch gekennzeichnet,
daß das Stabilisierungsmittel wenigstens einen Puffer enthält, mit dem der pH-Wert der Beize auf einen Wert > 7,0 einstellbar ist.

15. Verfahren nach Anspruch 13,
dadurch gekennzeichnet,
daß der Puffer ein anorganisches wasserlösliches Salz ist.

16. Verfahren nach Anspruch 13,
dadurch gekennzeichnet,
daß das Stabilisierungsmittel wenigstens einen Komplexbildner enthält, der mit Eisenionen eine Komplex-Verbindung eingeht.

17. Verfahren nach einem der Ansprüche 13 bis 16,
dadurch gekennzeichnet,
daß die Beize sowohl wenigstens einen Puffer als auch wenigstens einen Komplexbilder enthält.

18. Verfahren nach einem der Ansprüche 13 bis 17,
dadurch gekennzeichnet,
daß die Beize eine Zusammensetzung gemäß den Ansprüchen 7-12 aufweist.

19. Beize nach einem der Ansprüche 1-12,
dadurch gekennzeichnet,
daß sie allgemein für Farbstoffe anwendbar ist, die durch den Kontakt mit der Oberfläche eines aus nicht rostfreiem Stahl bestehenden Autoklaven in ihrer Farbgebung beeinträchtigt werden.
